# EUROPEAN PATENT APPLICATION

(11) **EP 3 951 803 A1**
(43) Date of publication of application: **09.02.2022**
(21) Application number: 20760366.3
(22) Date of filing: 13.03.2020
(51) Int. Cl.: H01B 7/02, H01B 3/42, H01B 13/00, H01B 13/14, H01F 5/06, H01F 41/12

(54) **INSULATED ELECTRIC WIRE, COIL, AND ELECTRIC/ELECTRONIC INSTRUMENT**

(30) Priority: 29.03.2019 JP 2019066643
(71) Applicant: Essex Furukawa Magnet Wire Japan Co., Ltd., Tokyo 101-0047 (JP)
(72) Inventor: SAITO, Takeshi, Tokyo 1008322 (JP); YAMOTO, Satoko, Tokyo 1008322 (JP); TOMOMATSU, Isao, Tokyo 1008322 (JP)
(74) Representative: Forstmeyer, Dietmar
(86) International application number: PCT/JP2020/011212
(87) International publication number: WO 2020/203194

(57) **Abstract**

An insulated wire, containing a conductor and an insulating film (A) provided in contact with the conductor, in which the insulating film (A) contains polyaryletherketone, the polyaryletherketone has an exothermic peak at the range of 290 to 330°C in a differential scanning calorimetry when the polyaryletherketone is cooled at a temperature falling rate of 10°C/min from a temperature equal to or higher than the melting temperature of the polyaryletherketone, and the half width of the exothermic peak is 6°C or more.

## Description

### TECHNICAL FIELD

The present invention relates to an insulated wire, a coil, and an electrical or electronic equipment.

### BACKGROUND ART

In an inverter-related equipment (such as coils for electrical or electronic equipment, including high-speed switching devices, inverter motors, transformers, and the like), an insulated wire, in which an insulating film containing an insulating resin is provided on the outer periphery of a conductor, is used as a magnet wire.

Polyaryletherketone such as polyetheretherketone is widely used as a constituent material of the insulating film (for example, see Patent Literature 1).

### CITATION LIST

### PATENT LITERATURES

Patent Literature 1: JP-A-2018-14191 ("JP-A" means unexamined published Japanese patent application)

### SUMMARY OF INVENTION

### TECHNICAL PROBLEM

The insulating film composed of polyaryletherketone as the constituent material is generally formed by coating and baking, on the outer periphery of the conductor, a varnish made by dissolving the polyaryletherketone in a solvent. However, in a case of forming the insulating film by the coating and baking, the thickness of the insulating film that can be formed at once is several µm. Therefore, in order to make the insulating film a desired thickness, it is necessary to repeat the coating and baking multiple times. As a result, there are restrictions on improving production efficiency of the wire.

If the insulating film using polyaryletherketone on the outer periphery of the conductor is formed by extrusion covering, a desired thickness of the insulating film can be formed in one extrusion covering. However, in this case, it is difficult to sufficiently increase adhesion between the conductor and the insulating film. If the adhesion between the insulating film and the conductor is not sufficient, for example, when a wire was subject to a processing such as bending and stretch, peeling easily occurs between the insulating film and the conductor. If a void occurs between the conductor and the insulating film by this peeling, the electric field concentrates there and dielectric breakdown occurs, or the stress concentrates there and the insulating film tends to easily break.

In view of the above, the present invention is contemplated to provide an insulated wire that has polyaryletherketone contained in the insulating film in contact with the conductor, and that is excellent in adhesion between the conductor and the insulating film, even when the insulating film is formed as an extrusion covering layer.

### SOLUTION TO PROBLEM

In view of the above problems, the present inventors repeated intensive investigation. As a result, the present inventors found that even when polyaryletherketone is used as the constituent material of the insulating layer in contact with the conductor, the above-described problems can be solved by employing a compound having a specific broad exothermic peak in a specific temperature range as the polyaryletherketone. The present invention is based on these findings, and the present inventors further conducted investigation, thus completing the present invention.

The problems of the present invention were solved by the following means:
[1] An insulated wire, containing:
   a conductor; and
   an insulating film (A) provided in contact with the conductor;
   wherein the insulating film (A) contains polyaryletherketone;
   wherein the polyaryletherketone has an exothermic peak at the range of 290 to 330°C in a differential scanning calorimetry when the polyaryletherketone is cooled at a temperature falling rate of 10°C/min from a temperature equal to or higher than the melting temperature of the polyaryletherketone; and wherein the half width of the exothermic peak is 6°C or more.
[2] The insulated wire described in the item [1], wherein the insulating film (A) is an extruded covering layer.
[3] The insulated wire described in the item [1] or [2], wherein an insulating film (B) having different constituent material from that of the insulating film (A) is provided on the outer periphery of the insulating film (A).
[4] The insulated wire described in the item [3], wherein the insulating film (B) contains at least one kind of polyaryletherketone, polyetherimide, polyether sulphone, polyphenylene ether, polyphenylsulfone, polyimide, polyamide imide, a thermoplastic polyimide, and polyketone.
[5] A coil, containing the insulated wire described in any one of the items [1] to [4].
[6] An electrical or electronic equipment, having the coil described in the item [5].
[7] A method of producing an insulated wire, containing a step of forming an insulating film by extrusion-covering a resin containing a polyaryletherketone on the outer periphery of a conductor,
   wherein the polyaryletherketone has an exothermic peak at the range of 290 to 330°C in a differential scanning calorimetry when the polyaryletherketone is cooled at a temperature falling rate of 10°C/min from a temperature equal to or higher than the melting temperature of the polyaryletherketone; and wherein the half width of the exothermic peak is 6°C or more.
[8] A resin for an insulating film, containing polyaryletherketone,
   wherein the polyaryletherketone has an exothermic peak at the range of 290 to 330°C in a differential scanning calorimetry when the polyaryletherketone is cooled at a temperature falling rate of 10°C/min from a temperature equal to or higher than the melting temperature of the polyaryletherketone; and wherein the half width of the exothermic peak is 6°C or more.
[9] The resin for an insulating film described in the item [8], which is used for forming the insulating film by extrusion-covering the resin on the periphery of a conductor.

In the description of the present invention, any numerical expressions in a style of "...to..." will be used to indicate a range including the lower and upper limits represented by the numerals given before and after "to", respectively.

### EFFECTS OF INVENTION

Although the insulated wire of the present invention contains polyaryletherketone in the insulating film in contact with the conductor, the insulated wire is excellent in adhesion between the conductor and the insulating film even when the insulating film is formed as an extrusion covering layer.

### BRIEF DESCRIPTION OF THE DRAWINGS

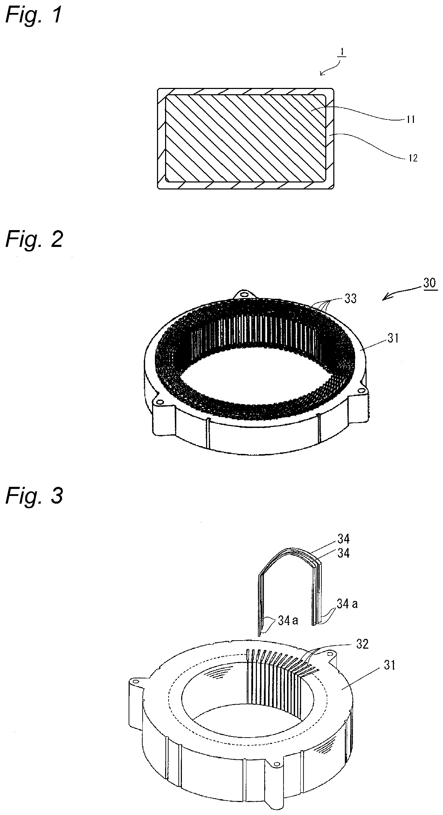

{Fig. 1}
   Fig. 1 is a schematic sectional view showing one embodiment of the insulated wire of the present invention.
{Fig. 2}
   Fig. 2 is a schematic perspective view showing a preferable embodiment of the stator to be used in the electrical or electronic equipment of the present invention.
{Fig. 3}
   Fig. 3 is a schematic exploded perspective view showing a preferable embodiment of the stator to be used in the electrical or electronic equipment of the present invention.

### MODE FOR CARRYING OUT THE INVENTION

### [Insulated wire]

Hereinafter, preferable embodiments of the insulated wire of the present invention are described.

Fig. 1 shows a preferred embodiment of the insulated wire of the present invention. The insulated wire 1 of the present invention has an insulating film 12 containing polyaryletherketone described later on the outer periphery of the conductor 11 and in contact with this conductor 11. In the present invention or the present specification, when referred to simply as "insulating film", "insulating film 12", or "insulating film (A)", these terms mean an insulating film (innermost insulating film) provided in contact with the conductor 11, unless otherwise indicated.

In the embodiment shown in Fig. 1, as to the conductor 11, its cross-sectional shape is rectangular (flat angular shape). A thickness of the insulating film 12 is set to a range of preferably 10 to 300 µm, more preferably 20 to 200 µm.

### <Conductor>

As the conductor to be used in the present invention, use may be made of any usual one that is conventionally used as a conductor of insulated wires, and examples thereof include a metal conductor such as a copper wire and an aluminum wire.

Fig. 1 shows a conductor as having a rectangular cross section (flat angular shape). However, the cross sectional shape of the conductor is not particularly limited, and can be any desired shape such as square, round, or ellipse.

In view of suppressing partial discharge from a corner portion, the rectangular conductor has preferably such a shape that chamfered edges (curvature radius r) are provided at four corners, as shown in Fig. 1. The curvature radius r is preferably 0.6 mm or less, and more preferably in a range from 0.2 to 0.4 mm.

The size of the conductor is not particularly limited. To give an example, in the case of the rectangular conductor, in the rectangular cross-sectional shape, the width (long side) thereof is preferably from 1.0 to 5.0 mm, and more preferably from 1.4 to 4.0 mm, and the thickness (short side) is preferably from 0.4 to 3.0 mm, and more preferably from 0.5 to 2.5 mm. The ratio of length (thickness:width) of the width (long side) and the thickness (short side) is preferably from 1:1 to 1:4. To the contrary, in the case of a conductor whose cross-sectional shape is round, the size is preferably 0.3 to 3.0 mm, and more preferably 0.4 to 2.7 mm in terms of a diameter.

### <Insulating film>

The insulating film 12 contains polyaryletherketone. In the present invention, "polyaryletherketone" is a thermoplastic polymer having an arylene group, an ether group, and a ketone group in its main chain.

The polyaryletherketone used in the present invention has an exothermic peak at the range of 290 to 330°C in a differential scanning calorimetry (DSC curve) when the polyaryletherketone is heated up to equal to or higher than the melting temperature (for example, 400°C) of the polyaryletherketone to subject the polyaryletherketone to the heat-melting, and then the polyaryletherketone is cooled at a temperature falling rate of 10°C/min. In addition, the half width of the exothermic peak is 6°C or more. In the polyaryletherketone having such exothermic peak, it is thought that crystallization at fall in temperature from a melting state progresses gradually and stress relaxation works effectively at the time of crystallization. As a result, for example, when a resin containing the polyaryletherketone is melted and an insulating film is formed by extrusion-covering the melted resin directly on the outer periphery of the conductor, it becomes possible to sufficiently increase adhesion between the insulating film formed and the conductor.

In the present invention, a melting temperature of the polyaryletherketone is synonymous with a melting point of the polyaryletherketone.

The above exothermic peak is usually a single peak observed in the above range of 290 to 330°C. When the peak is in the range of 290 to 330°C, the skirt of the peak may be outside the range of 290 to 330°C. Note that when multiple exothermic peaks appear in the above range of 290 to 330°C, the half width of at least one of the exothermic peaks should be 6°C or more.

The half width of the exothermic peak is determined as follows. In the DSC curve of the exothermic peak part, when a line H is drawn so as to translate a base line to the exothermic peak side by a half of the distance between the base line and a peak height of the exothermic peak, the half width is defined as a distance between 2 intersections at which the line H and the DSC curve of the exothermic peak part are intersected. The base line is in conformity with the requirements of JIS K 7121, and the DSC line is a DSC curve in a temperature range in which neither transition nor reaction occurs at a specimen. The base line is a straight-line connecting a rising start point at the low temperature side (the end of the skirt at the low temperature side of the exothermic peak) and a rising start point at the high temperature side (the end of the skirt at the high temperature side of the exothermic peak).

The upper limit of the half width is not particularly limited. The half width is practically 6 to 30°C, preferably 6 to 20°C, 6 to 17°C or 6.5 to 13°C. The half width may be 12°C or less, or 10°C or less.

The polyaryletherketone having the above-described exothermic peak may be synthesized by an ordinarily method. Alternatively, commercial products can also be used.

In addition, it is also possible to blend two or more kinds of polyaryletherketones to adjust the resultant to one with the desired exothermic peak. In this case, it is preferable to use two or more kinds of polyaryletherketones having different molecular weights. As one example, the constituent material of the insulating film 12 can be made by blending a first polyaryletherketone whose melt viscosity at temperature of 400°C and shear velocity of 1000 s⁻¹ is from 100 to 1000 Pa•s and a second polyaryletherketone whose melt viscosity at the same conditions is from 0.1 to 0.66 times of that of the first polyaryletherketone.

The shear velocity is determined by using a capillary rheometer in accordance with ASTM D3835.

Examples of the polyaryletherketone constituting the insulating film 12 include polyetheretherketone, polyetherketoneketone, polyetherketone, polyetheretherketoneketone, and polyetherketoneetherketoneketone. Among these, polyetheretherketone is preferable.

The insulated wire of the present invention contains the polyaryletherketone in the insulating film 12 in an amount of preferably 50 mass% or more, more preferably 70 mass% or more, further preferably 80 mass% or more, and further preferably 90 mass% or more.

In the above-described insulating film 12, various kinds of additives can be contained. Examples of such an additive include a cell nucleating agent, an antioxidant, an antistatic agent, an ultraviolet inhibitor, a light stabilizer, a fluorescent brightening agent, a pigment, a dye, a compatibilizing agent, a lubricating agent, a reinforcing agent, a flame retardant, a crosslinking agent, a crosslinking aid, a plasticizer, a thickener, a thinning agent, an elastomer, and the like. These additives may be derived from a resin containing polyaryletherketone as a raw material, or may be added separately.

The insulating film 12 may have a single-layer structure, or can be made of a multi-layer structure. In a case of the multi-layer structure, the constituent material in each layer of the multi-layer structure is the same.

Further, the insulated wire of the present invention may be configured to have an insulating film (B) formed of a different constituent material from that of the insulating film 12 on the outer periphery of the insulating film 12 (insulating film (A)) provided in contact with the outer periphery of the conductor 11. The insulating film (B) may be made of a single-layer structure, or can be made of a multi-layer structure. Further, the insulated wire of the present invention may be configured to have an insulating film (C) formed of a different constituent material from that of the insulating film (B) on the outer periphery of the insulating film (B).

That is, in the present invention, the phrase "An insulated wire, containing: a conductor; and an insulating film (A) provided in contact with the conductor" means that as long as the insulated wire has a conductor and an insulating film 12 (insulating film (A) that contains the specific polyaryletherketone as described above and that is provided in contact with the conductor, a presence or an absence and configuration (or form) of the insulating films other than the insulating film 12 are not particularly limited.

In a case where the insulated wire of the present invention has an additional insulating film on the periphery of the insulating film 12, the constituent material of the insulating film other than the insulating film 12 is not particularly limited and those materials ordinarily used for insulating films can be preferably used. For examples, an embodiment that at least one kind of polyaryletherketone, polyetherimide, polyether sulphone, polyphenylene ether, polyphenylsulfone, polyimide, polyamide imide, a thermoplastic polyimide, and polyketone is contained can be applied.

The thickness of the insulating film other than the insulating film 12 (the above-described insulating films (B) and (C)) is preferably 10 to 300 µm, more preferably 20 to 200 µm.

### [Production of insulated wire]

The insulated wire of the present invention can be obtained by directly covering the outer periphery of the conductor with a resin containing the above-described polyaryletherketone that is a constituent material of the insulating film 12. This covering method is not particularly limited, and the insulating film 12 may be formed by extrusion covering, or alternatively by coating and baking an ordinarily manner a varnish containing a resin containing the above-described polyaryletherketone and an organic solvent dissolving this material. Given the production efficiency of the wire, it is more preferable to form an insulating film 12 with a desired thickness in one extrusion covering, than repeating coating and baking multiple times to make the insulating film 12 to the desired thickness. In this way, even when the insulating film 12 in contact with the conductor 11 is formed as an extrusion covering layer, it is possible to sufficiently increase adhesion between the conductor 11 and the insulating film 12.

That is, a preferable embodiment of the production method of the insulated wire according to the present invention includes forming an insulating film by extrusion-covering, on the outer periphery of the conductor, a resin containing a polyaryletherketone which has an exothermic peak at the range of 290 to 330°C in a differential scanning calorimetry when the polyaryletherketone is cooled at a temperature falling rate of 10°C/min from a temperature (for example, 400°C) equal to or higher than the melting temperature of the polyaryletherketone, and in which the half width of the exothermic peak is 6°C or more. The above-described extrusion covering can be performed in an ordinary manner. Specifically, the extrusion covering can be carried out by melt-kneading a resin containing the above-described polyaryletherketone, and extruding the resin on the periphery of the conductor.

### [Coil, and Electrical or Electronic Equipment]

The insulated wire of the present invention is applicable to a field which requires electrical properties (resistance to voltage) and heat resistance, such as various kinds of electrical or electronic equipment, as a coil. For example, the insulated wire of the present invention is used for a motor, a transformer and the like, which can compose a high-performance electrical or electronic equipment. In particular, the insulated wire is preferably used as a winding wire for a driving motor of hybrid vehicle (HV) and electrical vehicle (EV). As descried above, according to the present invention, it is possible to provide an electrical or electronic equipment using the insulated wire of the present invention as a coil, in particular a driving motor of HV and EV.

The coil of the present invention is not particularly limited, as long as it has a form suitable for any of various kinds of electrical or electronic equipment, and examples thereof include: items formed by a coil processing of the insulated wire of the present invention, and items formed by electrically connecting prescribed parts after bending the insulated wire of the present invention.

The coils formed by coil processing of the insulated wire of the present invention are not particularly limited, and examples thereof include a roll formed by spirally winding around a long insulated wire. In these coils, the number of winding wires or the like of the insulated wire is not particularly limited. Ordinarily, in winding around the insulated wire, use may be made of an iron core, or the like.

Example of the coils formed by electrically connecting prescribed parts after bending the insulated wire of the present invention include coils used in stators for rotating electrical machines or the like. Examples of these coils include a coil 33 (see Fig. 2) prepared by, as shown in Fig. 3, cutting the insulated wire of the present invention in a prescribed length, and then bending them in the U-shaped form or the like, thereby preparing a plurality of wire segments 34, and then alternately connecting two open ends (terminals) 34a in the U-shaped form or the like of each wire segment 34.

The electrical or electronic equipment formed by using this coil is not particularly limited, and examples of one preferable embodiment of such electrical or electronic equipment include a transformer, and a rotating electric machine equipped with a stator 30 shown in Fig. 2 (in particular, driving motors of HV and EV). This rotating electric machine can be made in the same constitution as the conventional one, except for equipment of the stator 30.

The stator 30 can be made in the same constitution as the conventional one, except that its wire segment 34 is formed by the insulated wire of the present invention. Specifically, the stator 30 has a stator core 31, and a coil 33 in which, as shown in such as Fig. 2, the wire segments 34 formed of the insulated wire of the present invention are incorporated in a slot 32 of the stator core 31 and open ends 34a are electrically connected. This coil 33 is in the fixed state such that adjacent fusing layers, or the fusing layer and the slot 32 are firmly fixed. Herein, the wire segment 34 may be incorporated in the slot 32 with one segment. However, it is preferable that as shown in Fig. 3, two segments are incorporated in pairs. In this stator 30, the coil 33 formed by alternately connecting the open ends 34a that are two ends of the wire segments 34 which have been bent as described above, is incorporated in the slot 32 of the stator core 31. In this time, the wire segment 34 may be incorporated in the slot 32 after connecting the open ends 34a thereof. Alternatively, after incorporating the wire segment 34 in the slot 32, the open ends 34a of the wire segment 34 may be bent, thereby to connect them.

The present invention will be described in more detail based on examples given below, but the invention is not meant to be limited by these.

### EXAMPLES

### [Production Example] Production of insulated wire

### <Conductor 11>

A copper wire with a rectangular cross section (long side length of the cross section: 3 mm, short side length: 2 mm) was used as the conductor 11.

### <Formation of insulating film 12>

The polyetheretherketone (PEEK) resin shown in the Tables below was melted and kneaded, and the resultant was extruded and covered on the outer periphery of the conductor. The thickness of the formed insulating film 12 (insulating film (A)) was 100 µm.

For Example 10, the PEEK resin was further extruded and covered on the outer periphery of the insulating film, to form the insulating film (B). The thickness of the insulating film (B) was 100 µm.

### [Analysis] Determination of exothermic peak and half width by differential scanning calorimetry

The PEEK resin after melt-kneading used for the above extrusion and covering was cooled to 50°C, and the differential scanning calorimetry was performed using a differential scanning calorimeter (trade name: DSC-60A Plus, manufactured by Shimadzu Corporation) to obtain a DSC curve. Specifically, a DSC curve was obtained in a manner such that the temperature of 4.5 to 10.0 mg of the above-described PEEK resin kept at 50°C of the measurement-starting temperature was raised at a temperature raising rate of 10°C/min up to 400°C and was kept for 1 minute, and then the temperature was lowered at a temperature falling rate of 10°C/min. The exothermic peak in the range of 290 to 330°C was detected from the obtained DSC curve, and the half width thereof was determined.

Each of the exothermic peaks in the range of 290 to 330°C was a single peak.

The results are shown in the following Tables.

### [Test Example] Evaluation of adhesion strength

Along a longitudinal direction of the insulated wire stretched by 1% for straightening, two parallel incisions with the 1/3 to 1/2 width of the long side in cross-section of the insulated wire were made. These incisions were made to reach the conductor. The insulating film 12 located between these incisions was peeled from the conductor 11 using a tensile tester and the force (180° peel strength and peeling rate 10 mm/min) applied during peeling was measured.

The length of the above described peeling was set to 15 mm. The data of less than 5 mm from the peeling start was excluded in order to eliminate a bad influence such as a slack and an average value of irregularities in a range of 5 to 15 mm was measured. The measured value obtained was converted per 1 mm of incision width (unit: gf/mm). Tests were conducted 5 times on the same insulated wire, and the average of 5 measured values (unit: gf/mm) obtained was defined as adhesion strength.

The results are shown in the following Tables.

**Table 1**

| | | Ex 1 | Ex 2 | Ex 3 | Ex 4 | Ex 5 | Ex 6 |
|---|---|---|---|---|---|---|---|
| Insulating film (A) | Exothermic peak [°C] | 304 | 298 | 298 | 302 | 303 | 305 |
| | Half width [°C] | 8 | 9 | 7 | 7 | 7 | 7 |
| | PEEK-1 [mass parts] | 10 | 50 | 90 | | | |
| | PEEK-2 [mass parts] | 90 | 50 | 10 | 10 | 50 | 90 |
| | PEEK-3 [mass parts] | | | | 90 | 50 | 10 |
| Insulating film (B) | PEEK-2 | None | None | None | None | None | None |
| Adhesion strength [gf/mm] | | 120 | 180 | 130 | 90 | 120 | 100 |

| | | | | | | | |
|---|---|---|---|---|---|---|---|
| Note: 'Ex' means Example according to this invention. | | | | | | | |

**Table 2**

| | | Ex 7 | Ex 8 | Ex 9 | Ex 10 |
|---|---|---|---|---|---|
| Insulating film (A) | Exothermic peak [°C] | 302 | 298 | 298 | 298 |
| | Half width [°C] | 8 | 9 | 6 | 9 |
| | PEEK-1 [mass parts] | 10 | 50 | 90 | 50 |
| | PEEK-2 [mass parts] | | | | 50 |
| | PEEK-3 [mass parts] | 90 | 50 | 10 | |
| Insulating film (B) | PEEK-2 | None | None | None | Present |
| Adhesion strength [gf/mm] | | 80 | 150 | 100 | 110 |

| | | | | | |
|---|---|---|---|---|---|
| Note: 'Ex' means Example according to this invention. | | | | | |

**Table 3**

| | | C Ex 1 | C Ex 2 | C Ex 3 |
|---|---|---|---|---|
| Insulating film (A) | Exothermic peak [°C] | 298 | 304 | 303 |
| | Half width [°C] | 4 | 5 | 4 |
| | PEEK-1 [mass parts] | 100 | | |
| | PEEK-2 [mass parts] | | 100 | |
| | PEEK-3 [mass parts] | | | 100 |
| Insulating film (B) | PEEK-4 | None | None | None |
| Adhesion strength [gf/mm] | | Less than 10 | 30 | 20 |

| | | | | |
|---|---|---|---|---|
| Note: 'C Ex' means Comparative Example. | | | | |

The types of PEEK in the above Tables are shown below.
- PEEK-1
   VICTREX381G manufactured by VICTREX (melt viscosity at the shear velocity of 1000 s⁻¹: 300 Pa·s)
- PEEK-2
   VICTREX151G manufactured by VICTREX (melt viscosity at the shear velocity of 1000 s⁻¹: 150Pa·s)
- PEEK-3
   VICTREX90G manufactured by VICTREX (melt viscosity at the shear velocity of 1000 s⁻¹: 90Pa·s)

As shown in each of the above tables, even when the polyaryletherketone that constitutes the insulating film in contact with the conductor has an exothermic peak in the range of 290 to 330°C, in a case where the half width thereof is smaller than that specified in the present invention, the result was inferior in adhesion between the insulating film and the conductor (Comparative Examples 1 to 3).

In contrast, it was found that in a case where the polyaryletherketone that has an exothermic peak in the range of 290 to 330°C, in which a half width of the exothermic peak is 6°C or more, was used as a constituent material of the insulating film in contact with the conductor, the adhesion between the conductor and the insulating film was greatly increased in the insulated wire obtained (Examples 1 to 10).

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2019-066643 filed in Japan on March 29, 2019, which is entirely herein incorporated by reference.

### REFERENCE SIGNS LIST

- 1: Insulated wire
- 11: Conductor
- 12: Insulating film (single layer, multilayer)
- 30: Stator
- 31: Stator core
- 32: Slot
- 33: Coil
- 34: Wire segment
- 34a: Open end

## Claims

1. An insulated wire, comprising:
a conductor; and
an insulating film (A) provided in contact with the conductor;
wherein the insulating film (A) contains polyaryletherketone;
wherein the polyaryletherketone has an exothermic peak at the range of 290 to 330°C in a differential scanning calorimetry when the polyaryletherketone is cooled at a temperature falling rate of 10°C/min from a temperature equal to or higher than the melting temperature of the polyaryletherketone; and
wherein the half width of the exothermic peak is 6°C or more.

2. The insulated wire according to Claim 1, wherein the insulating film (A) is an extruded covering layer.

3. The insulated wire according to Claim 1 or 2, wherein an insulating film (B) having different constituent material from that of the insulating film (A) is provided on the outer periphery of the insulating film (A).

4. The insulated wire according to Claim 3, wherein the insulating film (B) comprises at least one kind of polyaryletherketone, polyetherimide, polyether sulphone, polyphenylene ether, polyphenylsulfone, polyimide, polyamide imide, a thermoplastic polyimide, and polyketone.

5. A coil, comprising the insulated wire according to any one of Claims 1 to 4.

6. An electrical or electronic equipment, comprising the coil according to Claim 5.

7. A method of producing an insulated wire, comprising a step of forming an insulating film by extrusion-covering a resin containing a polyaryletherketone on the outer periphery of a conductor,
wherein the polyaryletherketone has an exothermic peak at the range of 290 to 330°C in a differential scanning calorimetry when the polyaryletherketone is cooled at a temperature falling rate of 10°C/min from a temperature equal to or higher than the melting temperature of the polyaryletherketone; and
wherein the half width of the exothermic peak is 6°C or more.

8. A resin for an insulating film, comprising polyaryletherketone,
wherein the polyaryletherketone has an exothermic peak at the range of 290 to 330°C in a differential scanning calorimetry when the polyaryletherketone is cooled at a temperature falling rate of 10°C/min from a temperature equal to or higher than the melting temperature of the polyaryletherketone; and
wherein the half width of the exothermic peak is 6°C or more.

9. The resin for an insulating film according to Claim 8, which is used for forming the insulating film by extrusion-covering the resin on the periphery of a conductor.
